# EUROPEAN PATENT APPLICATION

(11) **EP 3 677 362 A1**
(43) Date of publication of application: **08.07.2020**
(21) Application number: 20150589.8
(22) Date of filing: 07.01.2020
(51) Int. Cl.: B22F 3/00, B22F 3/10, B29C 64/165, B33Y 10/00, B33Y 80/00

(54) **BINDER JET SHELL**

(30) Priority: 07.01.2019 US 201962789168 P
(71) Applicant: Howmedica Osteonics Corp., Mahwah, NJ 07430 (US)
(72) Inventor: HEARNE, Tommy, Hugginstown, Co. Kilkenny (IE); KENNY, Mark, Loughrea, Co. Galway (IE); ROBINSON, Joseph, Ridgewood, New Jersey 07450 (US); WESTNOTT, Kevin, Enniscorthy, Co. Wexford (IE)
(74) Representative: Regimbeau

(57) **Abstract**

A composite body comprising a first state having a first mixture including a binding agent and unfused powder and a second mixture including the unfused powder, where the first mixture surrounds and contains the second mixture.

## Description

### CROSS-REFERENCE TO RELATED APPLICATIONS

The present application claims the benefit of, and priority to, U.S. Provisional Patent Application Serial No. 62/789,168, filed on January 7, 2019, the entire contents of which are hereby incorporated herein by reference.

### BACKGROUND OF THE INVENTION

Additive manufacturing is a type of 3D printing where products are fabricated with custom geometries by means of sequentially adding layers of material. One form of additive manufacturing is binder jetting additive manufacturing ("BJAM"). During this process, a binding agent (*e.g.,* glue or the like) is deposited in a layer of powder, thereby binding the powder at pre-determined and specific points. A new layer of powder is then swept over the previous layer and the process is repeated until a desired, initially bound structure is formed. At this point, the surrounding, unbound powder is removed, usually by vacuum or pressurized air, leaving the initially bound structure.

This initially bound structure of a BJAM process is usually in a brittle state, typically called a "green" state, which has high porosity and weak mechanical properties. Thus, a post-processing treatment, such as sintering or infiltration, is often performed to remove the binding agent in the product and melt together the remaining powder. This, however, requires the initially bound structure to be transported and handled by an operator or machine while in that weakened, brittle state to the post-processing equipment.

During BJAM, the surrounding powder may provide structural support to the products as they are being manufactured. However, once the manufacturing is completed, and the excess powder is removed, the initially bound structures in their green state may lack sufficient support. This can result in destabilization of the build and/or damage to the individual products. While external supports may be attached to the build plate during manufacturing, this can increase the cost and complications of manufacturing where large products or large batches of products are being fabricated, and may limit the diversity and complexity of products capable of being manufactured.

Moreover, the size of BJAM products may be limited by the ability to remove the binding agent from the product and/or melt together the remaining powder. Again, the BJAM post-processing process usually requires post-processing treatments where the binding agent is burned out (leaving a porous product) before allowing the remaining material to bond together, as in sintering or infiltrating the now porous product with an alternative material, such as bronze. As the time required to remove the binding agent is related to the amount of binding agent in the product, the step of removing the binding agent may become too costly when the product's size and wall thickness becomes sufficiently large. The overall size of the product may also impact the ability for all remaining powder to melt together.

In certain cases, for a large product, the post-processing treatment may not be capable of being fully completed, resulting in unwanted pockets of porosity. This can create areas that increase the chance of capturing contaminants and/or weaken the structure.

Therefore, there is a need for an improved BJAM technique that facilitates the formation of large products, while minimizing the aforementioned drawbacks.

### BRIEF SUMMARY OF THE INVENTION

Several different support shells, as well as methods of manufacturing same, are disclosed herein. The shells permit large products to be formed more efficiently and with minimized risk of material contamination through a binder jetting fusion process.

According to one embodiment, a shell comprising a mixture of a binding agent and unfused powder, fully surrounding an interior comprising unfused powder.

In another embodiment, an object has a rectangular shell, comprising a mixture of a binding agent and unfused powder, fully surrounding an interior comprising unfused powder.

In another embodiment, an object has a shell, comprising a mixture of a binding agent and unfused powder, fully surrounding an interior. The interior has pockets of unfused powder separated by a lattice having a honeycomb shape. The lattice comprises a mixture of the binding agent and unfused powder.

In another embodiment, an object has a shell, comprising a mixture of a binding agent and unfused powder, fully surrounding an interior. The interior has pockets of unfused powder separated by a lattice having a stochastic shape. The lattice comprises a mixture of the binding agent and unfused powder.

In a further embodiment, a composite body comprising a first state having a first mixture including a binding agent and unfused powder and a second mixture including the unfused powder, where the first mixture surrounds the second mixture. Further, the unfused powder may be any one, or a combination of, metal powders, ceramics, polymers, plaster, ash, salt, sodium bicarbonate, food material, or aqueous-based powders. Further, the binding agent may be any one, or a combination of, PM-B-SR-1-04, furan resin, silicate binders, phenolic binders, aqueous-based binders, or silicone-based binders. Further, the first mixture may further comprise a first porosity and the second mixture further comprises a second porosity. Further, the first mixture may have a uniform thickness. Further, the first mixture may have a non-uniform thickness. Further, the first mixture may be a polygonal cross-sectional shape. Further, the polygonal cross-sectional shape may be a circular, rectangular, triangular, or trapezoidal shape. Further, the second mixture may further comprise a plurality of pockets having the unfused powder, and a lattice including the binding agent and the unfused powder, the lattice having a geometry that surrounds the plurality of pockets. Further, each pocket of the plurality of pockets may have an equal cross-sectional surface area. Further, each pocket of the plurality of pockets may have an unequal cross-sectional surface area. Further, the geometry may comprise any one, or a combination of, a honeycomb, random, or pseudo-random structure. Further, the random structure may be one, or a combination of, a stochastic or Voronoi structure. Further, a second state, wherein the binding agent is removed and the unfused powder is fused into a solid. Further, the composite body may further comprise an infusion material.

In a yet further embodiment, a method of forming a structure comprising the steps of placing a layer of powder on a substrate, combining a binding agent with the powder at specific locations to create a fused structure and an unfused structure, and repeating the placing and combining steps until the fused structure surrounds the unfused structure. Further, the method may further comprise solidifying the unfused powder. Further, the method may further comprise removing the binding agent from the first mixture to create a composite body. Further, the method may further comprise infiltrating the composite body with a material. Further, the material may be bronze.

### BRIEF DESCRIPTION OF THE DRAWINGS

These and other features, aspects, and advantages of the present invention will become better understood with regard to the following description, and accompanying drawings.
FIG. 1 is a cross-sectional view of an object having a circular shell.
FIG. 2 is a cross-sectional view of an object having a rectangular shell according to another embodiment of the present invention.
FIG. 3 is a cross-sectional view of an object having a shell with a honeycomb lattice in another embodiment of the present invention.
FIG. 4 is a cross-sectional view of an object having a shell with a stochastic lattice in another embodiment of the present invention.

### DETAILED DESCRIPTION

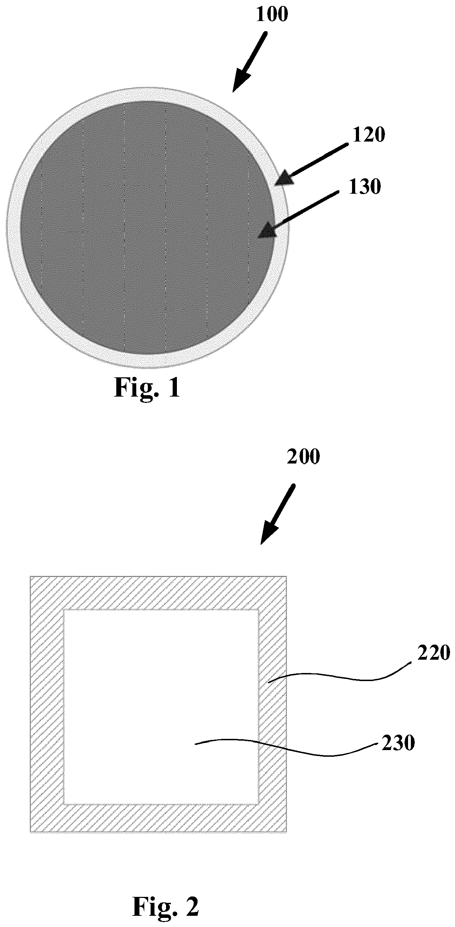

FIG. 1 depicts a cross-sectional view of object 100. Object 100 may be a product or products in a green state awaiting post-processing treatment (e.g., sintering, heat treatment, machining, or the like) or a plurality of parts requiring assembly for a product (*e.g.,* cube, shelf, part negative, or the like). Object 100 may be formed in a BJAM process wherein a bed of unfused powder is infused with a binding agent by a 3D printer. The unfused powder may be metal powders (*e.g*., cobalt chromium, titanium, inconel, stainless steel, aluminum alloy, nickel alloys, iron alloys, or the like), ceramics (*e.g*., silica sand, ceramic beads, glass, glass ceramics, or the like), polymers (*e.g*., nylon, acrylonitrile butadiene styrene, polyamide, polycarbonate, or the like), plaster, ash, salt, sodium bicarbonate, food material (*e.g*., sugar, flour), or other powders dissolvable by water. Binding agents may be, for instance, PM-B-SR-1-04 for binding metals, furan resin, silicate binders, phenolic binders, aqueous-based binders, silicone-based binders, or any binding agent known to one skilled in the art.

Object 100 is depicted as being in a green state having a shell 120 and an interior 130. Shell 120 is composed of unfused powder bound together by a binding agent, as described above. Interior 130 is composed entirely of unfused powder with no binding agent. Shell 120 surrounds and contains interior 130 to prevent the escape of any unfused powder. The binding agent in shell 120 assists in maintaining the shape of object 100 before and during the post-processing step by providing sufficient hold to the unfused powder of interior 130 such that object 100 can be transported to the post-processing station while maintaining its structural integrity. The post-processing step may involve a method of removing the binding agent in shell 120 while solidifying the unfused powder of both shell 120 and interior 130. Such methods are known in the art and may include sintering, curing, and/or heat treatment to between 100°C and 1400°C. Shell 120 may be further fortified by an infiltration process including materials such as bronze. Such a configuration can minimize manufacturing costs by requiring less binding agent and, correspondingly, reducing the time required to burn off the binding agent for larger objects.

Although FIG. 1 depicts shell 120 as circular, shell 120 can be any desired shape, including a polygonal shape as shown in FIG. 2. For instance, the shell may be triangular, trapezoidal, or any other polygonal shape. Moreover, the thickness of interior 130 and shell 120 may be a uniform or non-uniform thickness. For instance, a cross-sectional view of the object may show the shell and interior as being thicker or thinner in different sections. In this manner, the shell and interior may each be customized according to the demands of the manufacturer.

In another embodiment, illustrated in FIG. 2, a cross-sectional view of object 200 in a green state with shell 220 and interior 230 is provided, as described above. In this embodiment, shell 220 and interior 230 have a polygonal shape. Although FIG. 2 depicts shell 220 and interior 230 as both having a rectangular shape, shell 220 and interior 230 may have mismatching geometric shapes. For instance, the shell may have a circular exterior while the interior is predominantly circular, or any other desired combination of shapes. Alternatively, shell 220 and interior 230 may be a non-geometric shape.

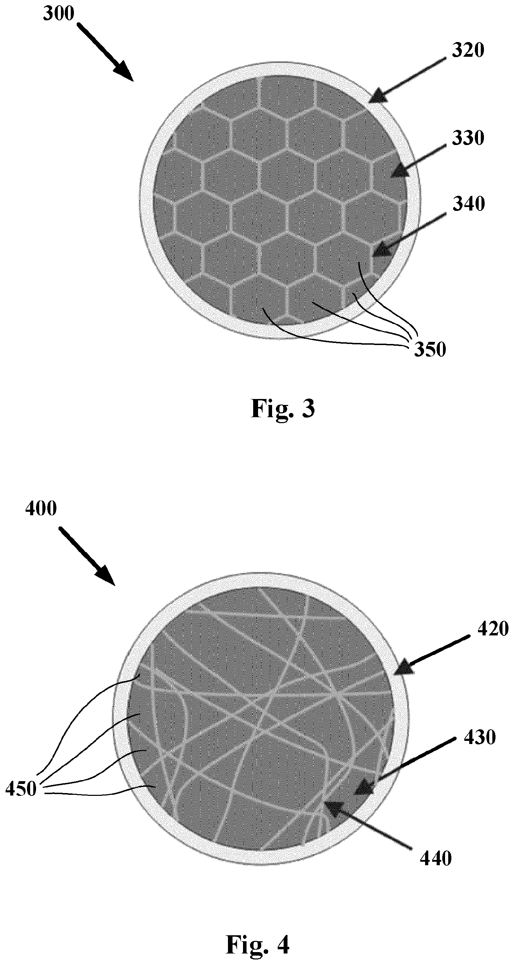

In another embodiment, illustrated in FIG. 3, a cross-sectional view of object 300 in a green state with shell 320 and interior 330 is provided, as described above. In this embodiment, interior 330 has lattice 340, and pockets 350. Similar to shell 320, lattice 340 is composed of unfused powder bound together by a binding agent. Lattice 340 is an interconnected matrix of unfused powder bound together by a binding agent, and taking the form of a honeycomb in geometry. In this manner, lattice 340 may provide additional support for object 300 by further distributing the stress across the honeycomb structure prior to, and during, the post-processing step.

Moreover, lattice 340 may assist in preventing the formation of large areas of gross porosity. Areas of gross porosity may arise where the individual particles in the unfused powder of an interior of an object settle to create sections of more densely packed powder and sections of empty space, or gross porosity, within the interior. These areas of gross porosity may be especially large where the interior of the object housing the unfused powder is larger. This may occur, for instance, when an object is manipulated before or during transportation, thereby agitating the unfused powder within the object. In this manner, large areas of gross porosity may be created within an object prior to post-processing where the object has a large interior housing the unfused powder. This large area of gross porosity may increase the risk of outside materials infiltrating and contaminating the object. Additionally, these large areas of gross porosity may decrease the support provided by the interior after the post-processing step.

Lattice 340 can help minimize the risk of gross porosity by surrounding pockets of unfused powder within interior 330 to create pockets 350 throughout object 300. As pockets 350 are, individually, smaller sections of unfused powder within interior 330 than interior 130, as shown in FIG. 1, the risk of unfused powder settling in such a manner as to create areas of gross porosity is minimized.

Although FIG. 3 depicts lattice 340 as being honeycomb in geometry, the lattice may take any shape as desired by the manufacturer. For instance, in another embodiment, illustrated in FIG. 4, a cross-sectional view of object 400 in a green state with shell 420, interior 430, lattice 440, and pockets 450 is provided, as described above. Although FIG. 4 depicts lattice 440 as having a stochastic structure, lattice 440 may alternatively have a Voronoi structure, or any other structure having a random or pseudo-random shape. Moreover, the lattice of FIGS. 3 or 4 may have any level of thickness, including a varying thickness. For instance, an object may have pockets of differing size, requiring different levels of minimum thickness in the surrounding lattice to support the different sized pockets. In this manner, a lattice may be customized as desired.

In addition to that described above and illustrated in the figures, other operations of use will now be described. It should be understood that the following operations do not have to be performed in the exact order described below. Instead, various steps may be handled in a different order or simultaneously. Steps may also be omitted or added unless otherwise stated therein.

In an embodiment of manufacture, object 100 in FIG. 1 may be manufactured by BJAM, as described above. After object 100 has been manufactured, it is then transported for post-processing. During transportation, shell 120 maintains the structural integrity of object 100 while ensuring that no unfused powder of interior 130 escapes. During post-processing, the binding agent is removed from shell 120 by means of sintering or heat-treatment, as described above. At the same time, shell 120 and interior 130 are fused together into a uniform solid core since no binding agent is removed.

In an alternative embodiment, during post-processing (*e.g*., sintering, or the like), the porous sections of object 100 left by the removal of the binding agent may be infiltrated with a strengthening material. In this manner, the risk of contamination from unwanted materials can be minimized.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the scope of the present invention as defined by the appended claims.

## Claims

1. A composite body comprising:
a first state having:
a first mixture including a binding agent and unfused powder; and
a second mixture including the unfused powder, where the first mixture surrounds the second mixture.

2. The composite body of claim 1, wherein the unfused powder is any one, or a combination of, metal powders, ceramics, polymers, plaster, ash, salt, sodium bicarbonate, food material, or aqueous-based powders.

3. The composite body of any one of claims 1 to 2, wherein the binding agent is any one, or a combination of, PM-B-SR-1-04, furan resin, silicate binders, phenolic binders, aqueous-based binders, or silicone-based binders.

4. The composite body of any one of claims 1 to 3, wherein the first mixture further comprises a first porosity and the second mixture further comprises a second porosity.

5. The composite body of any one of claims 1 to 4, wherein the first mixture has a polygonal cross-sectional shape having any one of a circular, rectangular, triangular, or trapezoidal shape.

6. The composite body of any one of claims 1 to 5, wherein the second mixture further comprises a plurality of pockets having the unfused powder, and a lattice including the binding agent and the unfused powder, the lattice having a geometry that surrounds the plurality of pockets.

7. The composite body of claim 6, wherein the geometry comprises any one, or a combination of, a honeycomb, random, or pseudo-random structure.

8. The composite body of claim 7, wherein the random structure is one, or a combination of, a stochastic or Voronoi structure.

9. The composite body of any one of claims 1 to 8, further comprising a second state, wherein the binding agent is removed and the unfused powder is fused into a solid.

10. The composite body of claim 9, further comprising an infusion material.

11. A method of forming a structure comprising the steps of:
placing a layer of powder on a substrate;
combining a binding agent with the powder at specific locations to create a fused structure and an unfused structure; and
repeating the placing and combining steps until the fused structure surrounds the unfused structure.

12. The method of claim 11, further comprising solidifying the unfused structure.

13. The method of any one of claims 11 to 12, further comprising removing the binding agent from the fused structure to create a composite body.

14. The method of any one of claims 11 to 13, further comprising infiltrating the composite body with a material.

15. The method of claim 14, wherein the material is bronze.
